# EUROPÄISCHE PATENTSCHRIFT

(11) **EP 2 872 522 B1**
(45) Veröffentlichungstag und Bekanntmachung des Hinweises auf die Patenterteilung: **27.04.2016**
(21) Anmeldenummer: 13732963.7
(22) Anmeldetag: 02.07.2013
(51) Int. Cl.: C07F 7/18

(54) **OXASILACYCLEN UND VERFAHREN ZU DEREN HERSTELLUNG**
OXASILACYCLENES AND METHOD FOR THE PRODUCTION THEREOF
OXASILACYCLES ET LEUR PROCÉDÉ DE PRODUCTION

(30) Priorität: 11.07.2012 DE 102012013711
(43) Veröffentlichungstag der Anmeldung: 20.05.2015
(73) Patentinhaber: Wacker Chemie AG, 81737 München (DE)
(72) Erfinder: HALBACH, Tobias, 81543 München (DE); STOHRER, Jürgen, 82049 Pullach (DE); RIEGER, Bernhard, 89275 Elchingen (DE); ANGER, Christian, 81671 München (DE)
(74) Vertreter: Fritz, Helmut
(86) Internationale Anmeldenummer: PCT/EP2013/063921
(87) Internationale Veröffentlichungsnummer: WO 2014/009204

(56) Entgegenhaltungen:
- WO-A1-03/014167
- WO-A1-2005/044828
- JP-A- 7 149 901
- US-A- 4 528 389
- XU, BAOPEI ET AL: "Spiro(benzoxasilole) catalyzed polymerization of oxetane derivatives", JOURNAL OF POLYMER SCIENCE, PART A: POLYMER CHEMISTRY , 30(9), 1899-909 CODEN: JPACEC; ISSN: 0887-624X, 1992, XP002712461,

## Beschreibung

Die Erfindung betrifft neuartige Oxasilacyclen und deren Herstellung.

In DE102008000353A1 werden vernetzbare Polymerabmischungen, die mindestens eine Alkoxysilylgruppe vom Typ ≡Si-O-C(R¹) (R²) (R³) enthalten, und deren Verwendung zur wasserfreien Silanvernetzung beschrieben.

In Organic letters 2010, 12, 4772-4775 wird eine Synthese für Oxasilinane und Oxasilepane mittels intramolekularer Hydrosilylierung beschrieben. Strukturen, bei denen das dem Sauerstoff benachbarte C-Atom quartär substituiert ist, werden nicht beschrieben.

In DE 19628588A1 werden cyclische Silanester und deren Solvolyseprodukte sowie Verfahren zur Herstellung der cyclischen Silanester und der Solvolyseprodukte beschrieben. Die Herstellung erfolgt über ein Hydrogensilan, das über die Stufe des Organohydrogensilanesters in einer Hydrosilylierungsreaktion zu einem cyclischen Organosilanester umsetzt wird.

Tetrahedron Letters 1992, 33, 5037 beschreibt die intramolekulare Hydrosilylierung zu 5-Ringen mit Pt-Katalysatoren.

In DE102006048217 und DE102010003108 wird die Herstellung cyclischer Alkoxysilane beschrieben. Hierbei werden jedoch keine spirocyclischen Silane oder Alkoxy-substituierten Oxasilacyclen beschrieben.

In WO 03014167 A1 und WO 2005044828 A1 werden Oxasilacyclen und ihre Verfahren zur Herstellung beschrieben.

Spirocyclische Oxasilacyclen und Alkoxy-substituierte Oxasilacyclen, bei denen das dem Sauerstoff benachbarte C-Atom quartär substituiert ist und die über eine intramolekulare Hydrosilylierung hergestellt werden, werden nicht erwähnt.

Gegenstand dieser Erfindung ist ein Verfahren zur Herstellung von Oxasilacyclen der allgemeinen Formeln (1) oder (2) 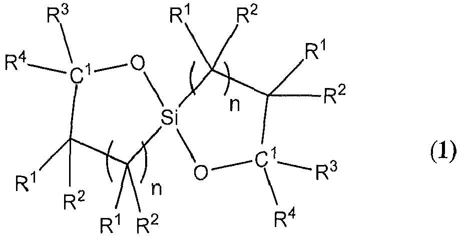 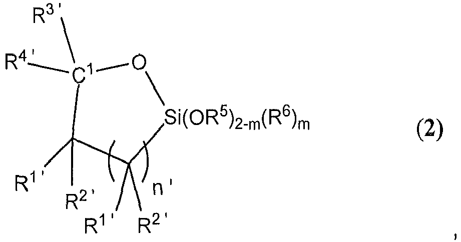 bei dem die Silane der allgemeinen Formeln (3) oder (4) 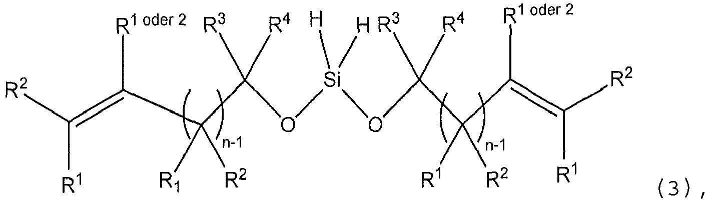 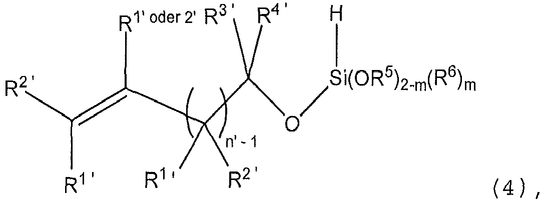 in Gegenwart von Hydrosilylierungskatalysatoren umgesetzt werden, die ausgewählt werden aus Triorganoboranen BR₃, Aminoboran-Komplexen R₃NBH₃ und Phosphinboranen R₃PBH₃, wobei
**R** einen unsubstituierten oder mit Halogenatomen substituierten Kohlenwasserstoffrest mit jeweils 1 bis 12 Kohlenstoffatomen,
**R¹, R², R^{1'}, R^{2'}** Wasserstoff, Halogen, Cyano, OH oder unsubstituierten oder substituierten Kohlenwasserstoffoxyrest, Acyloxyrest oder Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, wobei zwei oder drei der Reste **R¹, R², R^{1'}, R^{2'}** miteinander verbunden sein können,
R³, R⁴, R^{3'}, R^{4'} unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, oder hochmolekularen Rest
**R⁵, R⁶** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können,
**m** die Werte 0 oder 1 und
**n, n'** ganzzahlige Werte von mindestens 1 bedeuten.

Die Oxasilacyclen der allgemeinen Formeln (1) und (2) zeichnen sich dadurch aus, dass im Cyclus eine Si-O-C-Bindung auftritt, in der das C-Atom quartär substituiert ist, und es sich um eine spirocyclische Verbindung der Formel (1) oder eine cyclische Verbindung der Formel (2) mit mindestens einer weiteren Kohlenwasserstoffoxygruppe handelt.

Die unsubstituierten oder substituierten Kohlenwasserstoffoxyreste, Acyloxyreste, Alkoxyreste oder Kohlenwasserstoffreste weisen jeweils vorzugsweise 1 bis 12 Kohlenstoffatome, insbesondere 1 bis 6 Kohlenstoffatome auf.

Beispiele für Kohlenwasserstoffreste sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und
Aralkylreste, wie der Benzylrest, der α- und der β-Phenylethylrest.

Die Substituenten an den Kohlenwasserstoffresten **R³, R⁴, R^{3'},** R⁴, R⁵, R⁶ können beispielsweise Halogene, wie Fluor, Chlor oder Brom oder Cyanoreste sein.

Die Reste **R³** und **R⁴** und **R³** und **R⁴,** weisen vorzugsweise 1 bis 12, insbesondere 1 bis 6 Kohlenstoffatome auf. Ebenso bevorzugt sind hochmolekulare Reste, die bevorzugt (polymere) Wiederholungseinheiten aufweisen.
Besonders bevorzugt stellen die Reste **R³** und **R⁴** und **R^{3'}** und **R^{4'}** Methyl-, Ethyl-, Propyl-, Butyl-, Vinyl-, Phenyl- oder Carboxylreste -C(O)OCH₃ dar.

Die Cyclen in den Oxasilacyclen der allgemeinen Formeln (1) und (2) sind mindestens ein 5-gliedriger Ring **(n, n' =** 1), bevorzugt ein 6- oder 7-gliedriger Ring **(n, n'=** 2, 3).
Die Oxasilacyclen der allgemeinen Formeln (1) und (2) weisen entweder zwei Cyclen (Formel (1)) oder einen Cyclus (Formel (2) ) auf.
Oxasilacyclen der allgemeinen Formel (2) weisen bevorzugt mindestens eine OR⁵-Gruppe auf, bei denen **R⁵** bevorzugt eine Alkyl- oder Arylgruppe ist. Bei **R⁶** handelt es sich bevorzugt um eine Alkyl-, Carbonyl- oder Arylgruppe wie z.B. Methyl, Ethyl, Propyl, Phenyl, Methoxy, Ethoxy, Acetoxy.

Beispiele für bevorzugte Strukturen sind:
a) n=2; R¹ ,R² =H; R³, R⁴=CH₃
b) n=3; R¹, R² =H; R³, R⁴=CH₃
c) n'=2; R^{1'} ,R^{2'} =H; R^{3'} ,R^{4'} =CH₃; m=1; R⁵ =CH₃, R⁶=CH₃
d) n'=2; R^{1'}, R^{2'}=H; R^{3'}, R^{4'}=CH₃; m=1; R5 =C₂H₅, R⁶=CH₃
e) n'=2; R^{1'} ,R^{2'} =H; R^{3'}, R^{4'}=CH_{3;} m=1; R⁵=C₂H₅ , R⁶ =C₂H₅
f) n'=2; R^{1'} ,R^{2'} =H; R^{3'},R^{4'}=CH₃; m=1; R⁵=i-C₃H₇, R⁶=CH³
g) n'=2; R^{1'} ,R^{2'} =H; R^{3'} ,R⁴' =CH₃; m=0; R⁵=CH₃
h) n'=2; R^{1'} ,R^{2'} =H; R^{3'} ,R^{4'} =CH₃; m=0; R⁵ =C₂H⁵

Zur Herstellung der Silane der allgemeinen Formeln (3) oder (4) können gängige, dem Fachmann geläufige Verfahren zum Einsatz kommen. Beispielsweise können Chlorsilane mit entsprechenden Alkoholen, die eine endständige Doppelbindung enthalten, umgesetzt werden und anschließend durch intramolekulare Hydrosilylierung der Ringschluss durchgeführt werden.

Fachmann bekannten Hydrosilylierungskatalysatoren erfolgen. Bevorzugt werden Platinmetalle oder deren Verbindungen oder Triorganoborane BR₃ oder Aminoboran-Komplexe R₃NBH₃ oder Phosphinborane R₃PBH₃, wobei **R** einen unsubstituierten oder mit Halogenatomen substituierten Kohlenwasserstoffrest mit jeweils 1 bis 12 Kohlenstoffatomen bedeutet, als Katalysator verwendet.

Als Platinmetalle und deren Verbindungen sind Platin und/oder dessen Verbindungen bevorzugt. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆·6H₂O, Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.
Palladium und/oder dessen Verbindungen wie z.B. Tetrakistriphenylphosphinpalladium(0) sind ebenfalls geeignet.

Beispiele für Aminoboran-Komplexe R₃NBH₃ sind Trimethylaminboran, Triethylaminboran, Tricyclopentylaminboran, Triphenylaminboran oder Dimethylbenzylaminboran.

Beispiele für Phosphinborane R₃PBH₃ sind Trimethylphosphinboran, Tributylphosphinboran oder Triphenylphosphinboran.

Ein Beispiel für Triorganoborane BR₃ ist B(C₆F₅)₃.

Vorzugsweise bedeutet **R** einen mit Fluor oder Chlor substituierten, insbesondere perfluorierten Kohlenwasserstoffrest. Besonders bevorzugt wird B(C₆F₅)₃ als Katalysator verwendet.

Vorzugsweise werden Triorganoborane BR₃ in Mengen von 0,1 bis 10 mol-%, insbesondere 0,5 bis 5 mol-%, jeweils bezogen auf die Silane der allgemeinen Formeln (3) oder (4) eingesetzt.

Die Temperatur bei der intramolekularen Hydrosilylierung beträgt vorzugsweise -80°C bis 120°C, besonders bevorzugt - 10°C bis 50°C, insbesondere 0°C bis 30°C.

Die intramolekulare Hydrosilylierung kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120°C bei 0,1 MPa bevorzugt.

Beispiele für solche Lösungsmittel sind Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan; Ketone, wie Aceton, Methylethylketon, Di-isopropylketon, Methyl-isobutylketon (MIBK); ; Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Die Oxasilacyclen finden Anwendung zur Modifizierung und Vernetzung von Siloxanen und organischen Polymeren.
Cyclische Strukturen wie zum Beispiel 2-isopropoxy-2,6,6-trimethyl-1,2-oxasilinan können zur Darstellung von neuen polymerisierbaren und vernetzbaren telechelen Strukturen verwendet werden. Diese reagieren ohne Zugabe von Katalysatoren mit hydroxyterminierten Polydimethylsiloxanen zum Telechel.

Die Oxasilacyclen der allgemeinen Formeln (1) und (2) zeichnen sich dadurch aus, dass mit Katalysatoren **(K)** eine Ringöffnung unter Bildung von Silanolgruppen ≡Si-OH und endständigen Doppelbindungen erreicht wird. Ein Beispiel hierzu ist folgende Struktur, die durch die Ringöffnung von 2,2,8,8-Tetramethyl-1,7-dioxa-6-silaspiro[5.5]undecan entsteht:

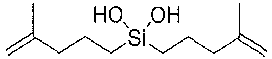

Im Gegensatz zu DE102008000353A1 wird keine Vinylfunktionelle Verbindung als niedermolekulares Spaltprodukt freigesetzt. Die Vinylfunktionelle Verbindung verbleibt nach Ringöffnung am Si-Atom.
Besonders bevorzugt erfolgt die Ringöffnung ohne Zutritt von (Luft-)Feuchtigkeit.
Bevorzugte Katalysatoren **(K)** sind Lewis-Säuren und Brönstedt-Säuren.

Alle vorstehenden Symbole der vorstehenden Formeln weisen ihre Bedeutungen jeweils unabhängig voneinander auf.

Soweit nicht anders angegeben sind alle Mengen- und Prozentangaben in den nachstehenden Beispielen auf das Gewicht bezogen, alle Drücke 0,10 MPa (abs.) und alle Temperaturen 20 °C.

### Beispiel 1: Synthese von Bis((2-methylpent-4-en-2-yl)oxy)silan (3)

Im ausgeheizten Schlenk-Dreihalskolben mit Rückflusskühler und Tropftrichter werden 250 mL trockener Diethylether vorgelegt und dann ca. 25 ml des im Tropftrichter befindlichen Gemisches aus 31.9 g (389 mmol) 1-Methylimidazol und 38.9 g (389 mmol) 2-Methylpent-4-en-2-ol in 50 mL Diethylether zugegeben. Anschließend wird auf -78 °C gekühlt und man lässt unter Rühren 19.63 g (194 mmol) Dichlorsilan eindiffundieren, welches zuvor bei -78 °C in ein Schlenkrohr kondensiert worden ist. Währenddessen wird die restliche im Tropftrichter befindliche Lösung langsam zugetropft und anschließend das Reaktionsgemisch auf RT aufgewärmt. Nach Rühren für 10 h wird das entstandene Methylimidazolhydrochlorid über eine Schlenkfritte abfiltriert und das Lösungsmittel im Vakuum entfernt. Die Reinigung erfolgt durch fraktionierte Kondensation (0.3 mbar, Ölbadtemperatur: 60 °C) und man erhält 35.7 g (156 mmol, 81 %) Bis((2-methylpent-4-en- 2-yl)oxy)silan in Form einer farblosen Flüssigkeit.
¹H-NMR (300 MHz, CDCl₃, 300 K) : δ [ppm] = 5.97 - 5.76 (m, 2H, H-3), 5.14 - 5.00 (H, 4H, H-4), 4.67 (s, 2H, Si-H), 2.29 (d, ³J = 7.3 Hz, 4H, H-2), 1.3 (s, 12, H-5).
¹³C-NMR (75 MHz, CDCl₃, 300 K) : δ [ppm] = 134.8 (s), 117.7 (s), 75.5 (s), 49.0 (s), 29.1 (s, 2C).
MS (EI), m/z (%): 213.16 (13) [(M-CH₃)⁺], 187.13 (100), 129.08 (87) [(M-C₆H₁₁O)⁺] .
HRMS (C₁₁H₂₁O₂²⁸Si = [(M - CH₃)⁺] ) : ber. :213. 1311, gef .: 213.1305.

### Beispiel 2: Synthese von 2,2,8,8-Tetramethyl-1,7-dioxa-6-silaspiro[5.5]undecan (1)

Im ausgeheizten Schlenkkolben werden 23.8 g (104 mmol) Bis((2-methylpent-4-en-2-yl)oxy)silan (Beispiel 1) in 400 mL trockenem Dichlormethan vorgelegt und unter Rühren bei Raumtemperatur 1.06 g (2.07 mmol, 2 mol%) des Katalysators B(C₆F₅)₃ zugegeben. Das Reaktionsgemisch wird dann für 16 h bei Raumtemperatur gerührt und das Reaktionsgemisch durch fraktionierte Kondensation gereinigt.
¹H-NMR (300 MHz, CDCl₃, 300 K): 1.91 - 1.64 (m, 4H), 1.60 - 1.38 (m, 4H), 1.29 (s, 6H), 1.20 (s, 6H), 0.68 - 0.42 (m, 4H). ¹³C-NMR (126 MHz, CDCl₃, 300 K) : 74.4 (s, 2C) , 40.9 9 (s, 2C), 31.7 (s, 2C), 30.2 (s, 2C), 17.8 (s, 2C), 12.1 (s, 2C). ²⁹Si-NMR (99 MHz, CDCl₃, 300 K) : 14.41 (s).
MS (EI), m/z (%): 228 (7) [M⁺] , 213 (100), [(M-CH₃)⁺], 186 (19), 129 (26), 127 (23).
HRMS (C₁₂H₂₄O²⁸Si) : ber. : 228.1546, gef.: 228.1542.

### Beispiel 3: Synthese von Methyl-Chlor-((2-methylpent-4-en-2-yl)oxy)silan

In einem ausgeheizten 1 1 Schlenkkolben mit Tropftrichter (250 ml) werden 20,00 g (174 mmol) Dichloromethylsilan in 500 ml trockenem Pentan vorgelegt. Im Tropftrichter werden 10.97 g (134 mmol) Methylimidazol und 13,39 g (134 mmol) 2-Methylpent-4-en-2-ol in 150 ml trockenem Pentan gelöst und während eines Zeitraumes von 1 h bei 0 °C zugegeben. Nach 30 min rühren bei 0 °C wird das ausgefallene MethylimidazolHydrochlorid über eine Schlenkfritte abgetrennt, und das Lösemittel im Vakuum entfernt. Die Aufreinigung erfolgt mittels Destillation im Vakuum, das Produkt wird bei 10 mbar und 38 °C erhalten.
Ausbeute: 19,7 g (110,2 mmol, 68,5 %)
¹H-NMR (500 MHz, CDCl₃, 300 K) : δ [ppm] = 5.93-5.79 (m, 1H), 5.33-5.31 (m, 1H), 5.13-5.05 (m, 2H),
2.33 (d, 2H), 1.35 (s, 6H), 0.52 (s, 3H).

### Beispiel 4: Synthese von 2-Isopropoxy-Chlor-(2-methylpent-4-en-2-yl)silan (4)

In einem ausgeheizten 1 1 Schlenkkolben mit Tropftrichter (250 ml) werden 4,3 g (24 mmol) Methyl-Chlor-((2-methylpent-4-en-2-yl)oxy)silan aus Beispiel 3 in 500 ml trockenem Pentan vorgelegt. Im Tropftrichter werden 1,58 g (19mmol) Methylimidazol und 1,45 g (24 mmol) Isopropanol in 150 ml trockenem Pentan gelöst und während eines Zeitraums von 1 h bei 0 °C zugegeben. Nach 45 min rühren bei 0 °C wird das ausgefallene Methylimidazol Hydrochlorid über eine Schlenkfritte abgetrennt, und das Lösemittel im Vakuum entfernt. Das Rohprodukt wird mittels fraktionierter Kondensation gereinigt(Ölbad 60 °C, Vorlage N₂-gekühlt, Druck: 0,7-0,2 mbar)
¹H-NMR (500 MHz, CDCl₃, 300 K) : δ [ppm] = 5.94-5.80 (m, 1H), 5.08-5.02 (m, 2H), 4.73 (d, 1H), 4.16 (sept, 1H), 2.28 (d, 2H), 1.29 (s, 6H), 1.21 (d, 2H).

### Beispiel 5: 2-Isopropoxy-2,6,6-trimethyl-1,2-oxasilinan (2)

Im ausgeheizten Schlenkkolben werden 1.17 g (5.78 mmol) des 2-Isopropoxy-Chlor-(2-methylpent-4-en-2-yl)silans aus Beispiel 4 mit 40 mg (0.08 mmol, 1.4 mol%) B(C₆F₅)₃ gelöst in Dichlormethan versetzt und bei RT für 12 h gerührt. Anschließend wird das Dichlormethan bei vermindertem Druck entfernt (200 mbar) und das Rohprodukt durch fraktionierte Kondensation gereinigt.
¹H NMR (300 MHz, CDCl₃) δ 4.24 - 4.06 (m, 1H), 1.88 - 1.68 (m, 2H), 1.56 - 1.42 (m, 2H), 1.29 (s, , 3H), 1.17 (t, J = 5.9 Hz, 6H), 0.74 - 0.43 (m, 2H), 0.11 (s, 3H).
MS (EI), m/z (%) : 187.2 (100) [(M-CH₃)⁺], 160.1 (15), 159.1 (24), 145.1 (28), 143.1 (13) [(M-OCH(CH₃)₂)⁺], 117.1 (23).
HRMS (C₁₂H₂₄O₂²⁸Si) : ber. : 202 . 1389, gef . : 202 . 1381 .

## Patentansprüche

1. Verfahren zur Herstellung von Oxasilacyclen der allgemeinen Formeln (1) oder (2) 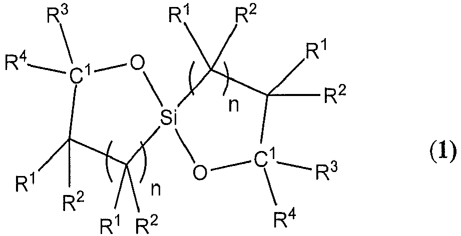 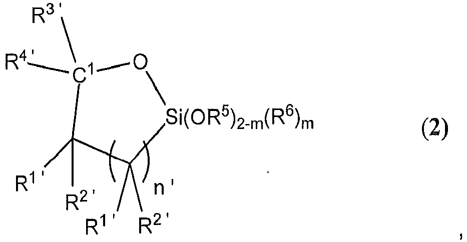 bei dem die Silane der allgemeinen Formeln (3) oder (4) 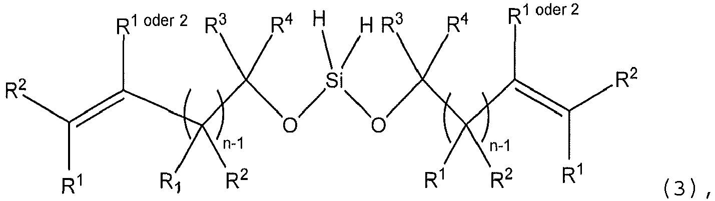 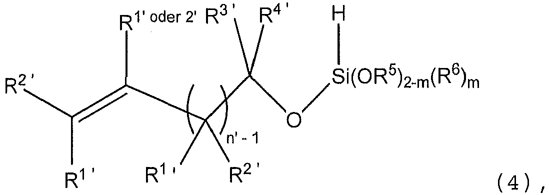 in Gegenwart von Hydrosilylierungskatalysatoren umgesetzt werden, die ausgewählt werden aus Triorganoboranen BR₃, Aminoboran-Komplexen R₃NBH₃ und Phosphinboranen R₃PBH₃, wobei
**R** einen unsubstituierten oder mit Halogenatomen substituierten Kohlenwasserstoffrest mit jeweils 1 bis 12 Kohlenstoffatomen,
**R¹, R², R^{1'} R^{2'}** Wasserstoff, Halogen, Cyano, OH oder unsubstituierten oder substituierten Kohlenwasserstoffoxyrest, Acyloxyrest oder Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, wobei zwei oder drei der Reste **R¹, R², R^{1'} , R^{2'}** miteinander verbunden sein können,
**R³, R⁴, R^{3'} R^{4'}** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können, oder hochmolekularen Rest
**R⁵, R⁶** unsubstituierten oder substituierten Kohlenwasserstoffrest mit jeweils 1 bis 50 Kohlenstoffatomen, bei denen jeweils nicht benachbarte Kohlenstoffatome durch Heteroatome, die ausgewählt werden aus N, O, P, S, ersetzt sein können,
**m** die Werte 0 oder 1 und
**n, n'** ganzzahlige Werte von mindestens 1 bedeuten.

2. Verfahren nach Anspruch 1, bei denen die Reste R³ und R⁴ und **R^{3'}** und **R^{4'}** ausgewählt werden aus Methyl-, Ethyl-, Propyl-, Butyl-, Vinyl-, Phenyl- oder Carboxylresten -C(O)OCH₃.

3. Verfahren nach Anspruch 1 oder 2, bei denen n die Werte 1, 2 oder 3 bedeutet.

4. Verfahren nach einem der vorangehenden Ansprüche, bei denen **R⁶** ausgewählt wird aus Methyl-, Ethyl-, Propyl-, Phenyl-, Methoxy-, Ethoxy-, Acetoxygruppe.

5. Verfahren nach einem der vorangehenden Ansprüche, bei denen die Substituenten an den Kohlenwasserstoffresten **R³, R⁴, R^{3'} R^{4'}, R⁵, R⁶** Halogene oder Wasserstoff oder Cyanoreste sind.

## Claims

1. Process for preparing oxasilacycles of the general formulae (1) or (2) 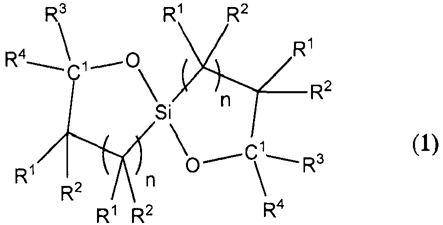 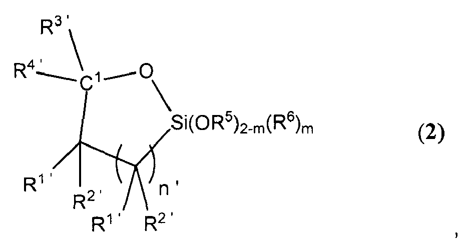 wherein the silanes of the general formulae (3) or (4) 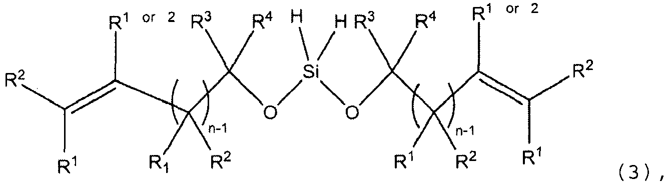 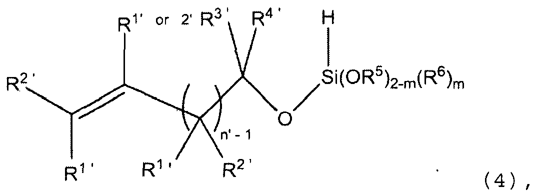 are reacted in the presence of hydrosilylation catalysts selected from triorganoboranes BR₃, aminoborane complexes R₃NBH₃, and phosphine-boranes R₃NBH₃ , where
**R** is a hydrocarbyl radical which is unsubstituted or substituted by halogen atoms and which has in each case 1 to 12 carbon atoms,
**R¹, R², R^{1'} ,** and **R^{2'}** are hydrogen, halogen, cyano, OH, or unsubstituted or substituted hydrocarbyloxy radical, acyloxy radical, or hydrocarbyl radical having in each case 1 to 50 carbon atoms, in each of which nonadjacent carbon atoms may be replaced by heteroatoms selected from N, O, P, and S, where two or three of the radicals **R¹, R², R^{1'},** and **R^{2'}** may be joined to one another,
**R³, R⁴, R^{3'} ,** and **R^{4'}** are unsubstituted or substituted hydrocarbyl radical having in each case 1 to 50 carbon atoms, in each of which nonadjacent carbon atoms may be replaced by heteroatoms selected from N, O, P, and S, or high molecular mass radical,
**R⁵** and **R⁶** are unsubstituted or substituted hydrocarbyl radical having in each case 1 to 50 carbon atoms, in each of which nonadjacent carbon atoms may be replaced by heteroatoms selected from N, O, P, and S,
**m** is the value 0 or 1, and
**n,** and **n'** are integral values of at least 1.

2. Process according to Claim 1, in which the radicals **R³** and **R⁴** and **R^{3'}** and **R^{4'}** are selected from methyl, ethyl, propyl, butyl, vinyl, phenyl, or carboxyl radicals -C(O)OCH₃.

3. Process according to Claim 1 or 2, in which **n** is the value 1, 2, or 3.

4. Process according to any of the preceding claims, in which **R⁶** is selected from methyl, ethyl, propyl, phenyl, methoxy, ethoxy, and acetoxy group.

5. Process according to any of the preceding claims, in which the substituents on the hydrocarbyl radicals **R³, R⁴, R^{3'} , R^{4'}, R⁵,** and **R⁶** are halogens or hydrogen or cyano radicals.

## Revendications

1. Procédé pour la préparation d'oxasilacycles des formules générales (1) ou (2) 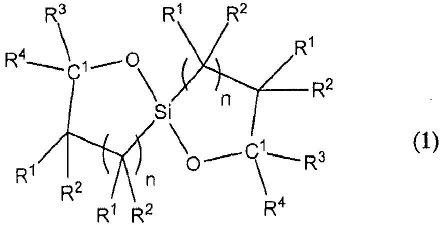 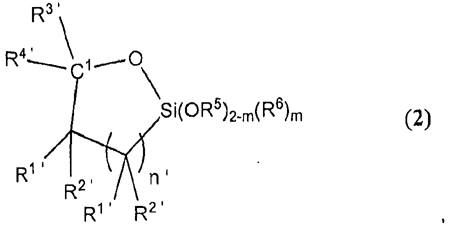 dans lequel on transforme des silanes des formules générales (3) ou (4) : 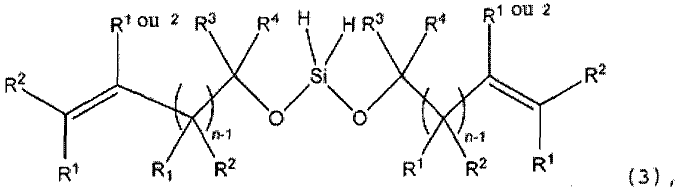 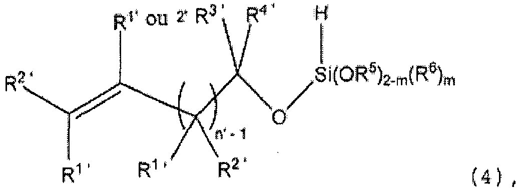 en présence de catalyseurs d'hydrosilylation qui sont choisis parmi les triorganoboranes BR₃, les complexes d'aminoborane R₃NBH₃ et les phosphinoboranes R₃PBH₃,
R signifiant un radical hydrocarboné non substitué ou substitué par des atomes d'halogène, comprenant à chaque fois 1 à 12 atomes de carbone,
R¹, R² , R^{1'}, R^{2'} signifiant hydrogène, halogène, cyano, OH ou un radical hydrocarbyloxy, acyloxy ou hydrocarboné substitué ou non substitué, comprenant à chaque fois 1 à 50 atomes de carbone, dans lesquels des atomes de carbone non adjacents peuvent à chaque fois être remplacés par des hétéroatomes, qui sont choisis parmi N, O, P, S, deux ou trois des radicaux R¹, R², R^{1'}, R^{2'} pouvant être reliés les uns aux autres,
R³, R⁴, R^{3'}, R^{4'} signifiant un radical hydrocarboné non substitué ou substitué comprenant à chaque fois 1 à 50 atomes de carbone, dans lesquels des atomes de carbone non adjacents peuvent à chaque fois être remplacés par des hétéroatomes, qui sont choisis parmi N, O, P, S, ou un radical de haut poids moléculaire
R⁵, R⁶ signifiant un radical hydrocarboné non substitué ou substitué comprenant à chaque fois 1 à 50 atomes de carbone, dans lesquels des atomes de carbone non adjacents peuvent à chaque fois être remplacés par des hétéroatomes, qui sont choisis parmi N, O, P, S,
m signifiant les valeurs 0 ou 1 et
n, n¹ signifiant des valeurs entières d'au moins 1.

2. Procédé selon la revendication 1, dans lequel les radicaux R³ et R⁴ et R^{3'} et R^{4'} sont choisis parmi les radicaux méthyle, éthyle, propyle, butyle, vinyle, phényle ou carboxyle -C(O)OCH₃.

3. Procédé selon la revendication 1 ou 2, dans lequel n signifie les valeurs 1, 2 ou 3.

4. Procédé selon l'une quelconque des revendications précédentes, dans lequel R⁶ est choisi parmi un groupe méthyle, éthyle, propyle, phényle, méthoxy, éthoxy, acétoxy.

5. Procédé selon l'une quelconque des revendications précédentes, dans lequel les substituants sur les radicaux hydrocarbonés R³, R⁴, R^{3'}, R^{4'}, R⁵, R⁶ représentent des halogènes ou hydrogène ou des radicaux cyano.
